# FASCICULE DE BREVET EUROPEEN

(11) **EP 3 857 169 B1**
(45) Date de publication et mention de la délivrance du brevet: **27.03.2024**
(21) Numéro de dépôt: 19773476.7
(22) Date de dépôt: 27.09.2019
(51) Int. Cl.: G01C 21/34

(54) **DISPOSITIF DE PLANIFICATION D'UN CHEMIN ET/OU D'UNE TRAJECTOIRE D'UN VEHICULE AUTOMOBILE**
VORRICHTUNG ZUR PLANUNG EINER WEGES UND/ODER TRAJEKTORIE FÜR EIN KRAFTFAHRZEUG
DEVICE FOR PLANNING A PATH AND/OR TRAJECTORY FOR A MOTOR VEHICLE

(30) Priorité: 28.09.2018 FR 1858980
(43) Date de publication de la demande: 04.08.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: AUBERT, Sébastien, 06200 Nice (FR); GIACALONE, Jean-Pierre, 06410 Biot (FR); WEINGERTNER, Philippe, 83440 FAYENCE (FR)
(74) Mandataire: Renault Group
(86) Numéro de dépôt international: PCT/EP2019/076315
(87) Numéro de publication internationale: WO 2020/065070

(56) Documents cités:
- WO-A1-2018/129850
- WO-A1-2018/175441
- FR-A1- 3 046 006
- US-B1- 10 013 773

## Description

La présente demande concerne le domaine des dispositifs et procédés de planification d'un chemin et/ou d'une trajectoire de véhicule automobile, et des programmes d'ordinateur destinés à la mise en oeuvre de tels procédés.

Les véhicules automobiles sont aujourd'hui équipés de dispositifs d'assistance à la conduite avancés de plus en plus performants. Un dispositif d'assistance à la conduite avancé a pour but de permettre la conduite autonome d'un véhicule automobile, c'est-à-dire sans intervention de la part du conducteur. En particulier, un dispositif d'assistance à la conduite avancé peut servir à planifier un chemin et/ou une trajectoire d'un véhicule automobile. Dans la présente demande, le terme « planifier » et ses dérivés seront compris au sens de leur définition usuelle dans le domaine des dispositifs d'assistance à la conduite avancés, à savoir que la planification d'un chemin ou d'une trajectoire signifie d'une succession d'états (position, vitesse, accélération) du véhicule automobile dans l'avenir correspondant au chemin ou à la trajectoire d'un état vers un autre état souhaité. Dans la présente demande, le chemin d'un véhicule sera considéré comme une forme géométrique correspondant à la progression du véhicule entre un point de départ et un point d'arrivée. La trajectoire d'un véhicule sera considérée comme l'évolution temporelle de la position du véhicule entre le point de départ et le point d'arrivée.

Des exemples connus de procédé de planification d'un chemin et/ou d'une trajectoire d'un véhicule automobile comprennent notamment les procédés de planification par résolution d'un problème de contrôle optimal modélisé à partir des équations de la mécanique de Lagrange de la première espèce. Les procédés de génération de chemin et/ou de trajectoire visent généralement à trouver un bon compromis entre le confort des occupants du véhicule et la sécurité.

Un exemple de procédé (ci-après le procédé Werling) de génération de trajectoire peut être consulté dans la publication « Optimal trajectory génération for dynamic street scénarios in a Frenét frame, IEEE International Conférence on Robotics and Automation », de Werling M., Ziegler J., Kammel S. et Thrun S. [1]. Le procédé Werling s'appuie sur une approche indirecte de résolution du problème de contrôle optimal. Selon cette approche, certains des paramètres d'entrée sont sélectionnés, le problème de contrôle optimal est résolu partiellement en ne tenant compte que des paramètres d'entrée sélectionnés et la solution est vérifiée a posteriori en utilisant les paramètres d'entrée non sélectionnés et les paramètres d'entrée sélectionnés. Toutefois, l'utilisation d'une approche indirecte manque de robustesse au vu du grand nombre de paramètres d'entrée devant être pris en compte. En outre, le fait que les contraintes d'évitement de collision soient vérifiées a posteriori peut avoir pour conséquence la planification de nombreux chemins et/ou trajets finalement rejetés à cause de risque de collision, utilisant ainsi beaucoup de ressources pour une quantité importante de déchet de calcul.

Un autre exemple de procédé de planification d'une trajectoire (ci-après le procédé Mercy) est décrit dans la publication « Time-optimal motion planning in the presence of moving obstacles », de Mercy T., Van Loock W., Pipeleers G. et Swevers, J. [2]. Cet exemple utilise une approche directe de la résolution du problème de contrôle optimal. Selon l'approche directe, toutes les contraintes sont considérées dans la résolution du problème. Pour cette raison, la présente invention est plus proche du procédé Mercy que du procédé Werling. Cependant, la complexité de l'algorithme associé au procédé Mercy rend son incorporation impossible dans un dispositif embarqué dans un véhicule automobile.

D'autres exemples de procédé de planification de chemin et/ou de trajectoire comprennent des procédés par champ de potentiel, dans lesquels chaque obstacle génère un champ antigravitationnel tendant à empêcher le véhicule de s'en approcher. De tels procédés présentent toutefois un risque de blocage dans un minimum local, et donc risquent de ne pas générer la meilleure solution au problème de planification d'un chemin et/ou d'une trajectoire.

Le document FR 3 046 006 A divulgue un procédé présentant des inconvénients similaires.

Le document WO 2018175441 A1 divulgue un procédé de planification d'un chemin et/ou d'une trajectoire d'un véhicule utilisant un réseau de neurones.

Au vu de ce qui précède, l'invention a pour but de permettre la planification d'un chemin et/ou d'une trajectoire de véhicule automobile en palliant les inconvénients précités.

Plus particulièrement, l'invention vise à permettre la mise en oeuvre d'une génération de chemin et/ou de trajectoire suffisamment robuste tout en diminuant la complexité de calcul.

A cet effet, il est proposé un procédé de planification d'une loi de commande comprenant l'ensemble des commandes pour qu'un véhicule automobile suive un chemin et/ou une trajectoire, selon la revendication 1.

Selon une de ses caractéristiques générales, le dispositif comprend un moyen de classification temporelle dans un ensemble de représentations compactées.

L'utilisation d'un moyen de classification temporelle permet de planifier un chemin et/ou une trajectoire en se fondant sur un historique. Une telle approche permet de tenir compte de tous les paramètres d'entrée comme dans le procédé Mercy tout en présentant une relativement faible complexité. En fait, l'utilisation d'un moyen de classification temporelle requiert un effort important pour la conception et le réglage de l'algorithme, mais requiert un effort faible pour la phase d'inférence de la planification. Le besoin en ressources de calcul est ainsi déplacé depuis la face d'inférence en ligne à une phase d'entraînement hors ligne.

Dans la présente demande, l'expression « loi de commande » sera comprise en ce sens qu'une loi de commande correspondant à un chemin ou une trajectoire comprend l'ensemble des commandes destinées à asservir les actuateurs pour que le véhicule suive le chemin ou la trajectoire tout en modélisant les contraintes physiques du châssis.

L'expression « classification temporelle » désigne l'action de classifier une pluralité de séquences d'entrée qui sont une fonction du temps.

L'expression « ensemble de représentations compactées » désigne un ensemble constitué par les séquences d'entrées ayant subi une opération de passage à un état compacté, c'est-à-dire, par exemple, une perte de notion du temps dans la séquence d'entrée, ou encore une suppression de certains points de la séquence d'entrée, dans le but de réduire leur empreinte mémoire.

Selon un mode de réalisation, le moyen de classification temporelle est configuré pour définir une surjection d'un ensemble d'entrées composé de différentes séquences de variables d'entrée de longueurs variables vers un ensemble de sorties composé de différentes séquences de variables de sortie de longueurs variables.

Une telle caractéristique est rendue possible notamment grâce à l'utilisation d'un moyen de classification temporelle. Ainsi, le moyen de classification temporelle ne sélectionne pas des séquences de variables d'entrée de longueur prédéfinie, mais continue de recevoir des variables d'entrée jusqu'à disposer de suffisamment de données pour déterminer une solution satisfaisante, augmentant ainsi la longueur de la séquence. La surjection entre l'ensemble d'entrées et l'ensemble de sorties est une application surjective d'un ensemble de trajectoires d'entrée vers un ensemble de trajectoires de sorties, correspondant aux différentes classes de trajectoires mémorisées. Par exemple, l'application peut s'apparenter à un groupage dans lequel, en outre, le système utilisé est capable d'interpoler ou d'extrapoler à des trajectoires non vues lors de l'apprentissage. Dans la présente demande, la longueur d'une séquence peut être temporelle, c'est-à-dire correspondant à une durée d'échantillonnage de la séquence, ou métrique, c'est-à-dire correspondant à une distance d'échantillonnage de la séquence. De même, le moyen de classification temporelle génère en sortie une séquence de variables pouvant prendre n'importe quelle longueur.

De préférence, l'ensemble d'entrée comprend une séquence de variables d'entrées temporelle et/ou une séquence de variables d'entrée métrique.

Selon une telle variante, on stocke en mémoire dans l'ensemble d'entrée diverses classes de trajectoire, via la classification temporelle, mais avec des trajectoires de longueurs diverses pour une meilleure représentativité des cas possibles.

Avantageusement, l'ensemble d'entrées comprend au moins une séquence de variables d'entrée choisie parmi une séquence de variables brutes issues de capteurs, une séquence de variables de représentation fusionnée d'un environnement extérieur du véhicule, une séquence de variables de représentation de paramètres internes du véhicule, une séquence de variables de représentation des comportements d'un agent et une séquence de variables de représentation des intentions d'un agent.

Dans la présente demande, le terme « représentation » sera compris comme un ensemble de données représentatives d'un évènement, de paramètres, d'un état, etc. Une « représentation fusionnée » est un ensemble de données issu de la fusion de données issues de différents capteurs et/ou estimateurs.

Dans un mode de réalisation, l'ensemble de sorties comprend une séquence de variables de sortie temporelle et/ou une séquence de variables de sortie métrique.

Préférentiellement, l'ensemble de sorties comprend au moins une séquence de sortie choisie parmi une séquence de couples de coordonnées de points de route, une séquence d'abscisses de points de route et une séquence d'ordonnées de point de route.

Dans un autre mode de réalisation, le moyen de classification temporelle est configuré pour utiliser une fonction de classification temporelle connexionniste.

Une fonction de classification temporelle peut être de divers types : champs de Markov cachés, RNN-LSTM, RNN-LSTM-CTC (connexionniste). L'utilisation d'une telle fonction permet la mise en oeuvre d'un entraînement efficace du moyen de classification temporelle.

Selon l'invention, le moyen de classification temporelle comprend un réseau de neurones récurrent étant configuré pour utiliser une fonction de classification temporelle connexionniste, de préférence un réseau de neurones récurrent à mémoire à court et long termes.

De tels exemples sont particulièrement adaptés pour constituer le moyen de classification temporelle car ils peuvent facilement être entraînés lors d'une phase d'entraînement hors ligne.

Selon une de ses caractéristiques générales, ce procédé comprend l'utilisation d'un moyen de classification temporelle dans un ensemble de représentations compactées.

Selon l'invention, le procédé comprend une phase d'entraînement hors-ligne du moyen de classification temporelle dans laquelle on groupe un ensemble de séquences de variables de sortie correspondant respectivement à des mêmes manoeuvres dans un groupement de premier niveau.

Un tel groupement est particulièrement adapté pour préparer le moyen de classification temporelle en vue de son bon fonctionnement au cours de la phase d'inférence.

Dans la présente demande, l'expression « hors-ligne » sera comprise comme signifiant qu'une phase hors-ligne se déroule en dehors d'une période de pilotage du véhicule par la loi de commande, par exemple lorsque le véhicule n'est pas en déplacement.

Selon un mode de mise en oeuvre, au cours de la phase d'entraînement hors-ligne, pour chaque groupement de premier niveau, l'on groupe un ensemble de séquences de variables correspondant respectivement à des manoeuvres de durées de mise en oeuvre sensiblement égales et/ou de distances de mise en oeuvre sensiblement égales dans un groupement de second niveau.

On affine ainsi encore davantage le réglage du moyen de classification temporelle de sorte à augmenter la robustesse de la planification sans pour autant augmenter la complexité de calcul.

Dans un mode de réalisation, le procédé comprend l'émission par le moyen de classification temporelle d'un indice et d'au moins un coefficient de modulation temporelle, la lecture dans une table de consultation d'un chemin associé à l'indice émis et la modulation temporelle du chemin lu par le coefficient de modulation temporelle émis.

De ce fait, le procédé selon l'invention consiste notamment à stocker une quantité de motifs de chemin avec un degré de liberté par rapport au temps qui devient un paramètre. Cela permet de limiter encore davantage la complexité de calcul.

Avantageusement, le moyen de classification temporelle émet un coefficient de modulation temporelle selon la direction longitudinale et/ou un coefficient de modulation temporelle selon la direction latérale.

Selon encore un autre aspect, il est proposé un programme d'ordinateur comprenant un code configuré pour, lorsqu'il est exécuté par un processeur ou une unité de contrôle électronique, mettre en oeuvre le procédé tel que défini précédemment.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une représentation schématique d'un dispositif de planification selon un mode de réalisation de l'invention,
- la figure 2 représente schématiquement un procédé de planification selon un mode de mise en oeuvre de l'invention,
- la figure 3 illustre une première phase du procédé de la figure 2,
- la figure 4 illustre une deuxième phase du procédé de la figure 2, et
- les figures 5 et 6 illustrent schématiquement le choix d'un chemin dans deux situations de fonctionnement respectives d'un véhicule.

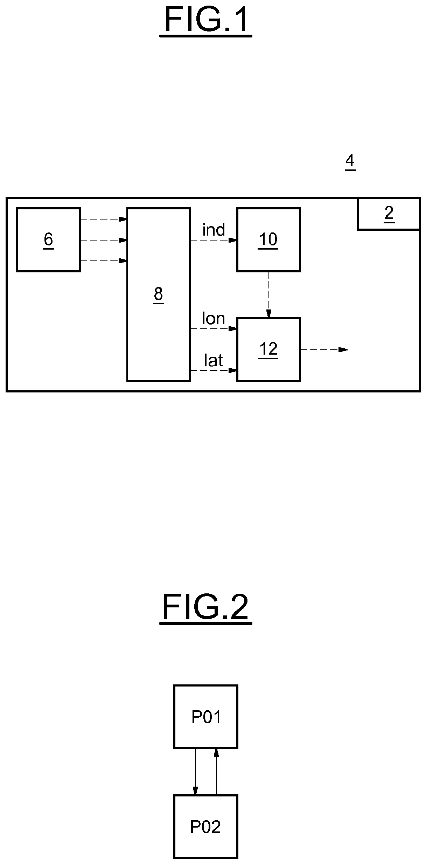

En référence à la figure 1, on a schématiquement représenté un dispositif de planification 2. Le dispositif 2 est destiné à planifier un chemin pour un véhicule automobile 4 dans lequel il est incorporé. Bien entendu, on peut sans sortir du cadre de l'invention envisager de configurer le dispositif 2 pour planifier une trajectoire du véhicule 4. Dans l'exemple illustré, le véhicule 4 est à conduite autonome. On peut sans sortir du cadre de l'invention envisager un véhicule incorporant le dispositif 2 n'étant pas à conduite autonome, c'est-à-dire conduit par un conducteur. Dans ce cas, le dispositif 2 est seulement destiné à fournir une assistance au conducteur, par exemple dans une situation de danger.

Dans l'exemple illustré, le dispositif 2 fait partie d'une architecture de conduite autonome (non représentée). Plus particulièrement, le dispositif 2 est en liaison d'informations avec un module de prédiction (non représenté), un module de fusion de capteurs (non représenté) et un module de localisation (non représenté) qui appartiennent à l'architecture de conduite autonome.

Le dispositif 2 comporte un module de réception 6 en liaison d'informations avec les autres modules de l'architecture de conduite autonome et avec l'ordinateur de bord du véhicule. Plus précisément, le module 6 est apte à recevoir une pluralité de séquences de variables d'entrée. Une séquence est un ensemble de valeurs prises par une variable. Une séquence temporelle est un ensemble de valeurs prises par une variable à une pluralité d'instants différents. Une séquence métrique est un ensemble de valeurs prises par une variable à une pluralité de positions différentes. Dans l'exemple illustré, la séquence est temporelle et constituée par des valeurs de la variable prises à une pluralité d'instants séparés par un pas de 40 ms.

Dans l'exemple illustré, le module 6 reçoit une séquence de vecteurs d'entrée dont les scalaires sont des variables d'entrée pouvant être des contraintes internes et des contraintes externes. Les contraintes internes sont notamment relatives à la sécurité et au confort des passagers du véhicule 4 et comprennent une intention du conducteur, une prédiction d'une manoeuvre à venir, la vitesse du véhicule 4, ou encore la saisie d'un mode de conduite du véhicule 4 par un passager. Les contraintes externes sont notamment relatives aux conditions environnementales et au trafic et comprennent la position, la vitesse et l'accélération d'autres véhicules, la courbure de la chaussée, des conditions météorologiques, un type de surface de la chaussée, une condition diurne ou nocturne, ou encore une information concernant la visibilité.

Le dispositif 2 comporte un réseau de neurones récurrent 8, communément désigné sous l'appellation anglo-saxonne « Récurrent Neural Network », ou sous l'acronyme correspondant « RNN ». On pourra se rapporter au document « Trajectory Génération Using RNN with Context Information for Mobile Robots », de Lee Y.-M. et Kim J.-H., dans la revue Robot Intelligence Technology and Applications [3] qui mentionne des exemples de réseaux de neurones récurrents. Le réseau de neurones récurrent 8 est en liaison d'informations avec le module de réception 6.

Dans l'exemple illustré, le réseau de neurones récurrent 8 est à mémoire à court et long termes. Cette caractéristique est communément désignée sous l'appellation anglo-saxonne « Long Short Term Memory » ou sous l'acronyme correspondant « LSTM ».

Le réseau de neurones récurrent 8 est configuré pour utiliser une fonction de classification temporelle connexionniste. Une telle fonction est communément désignée par l'appellation anglo-saxonne « Connectionnist Temporal Classification » ou sous l'acronyme correspondant « CTC ». En résultat, le réseau de neurones récurrent 8 forme un moyen de classification temporelle pour le dispositif 2. En outre, l'utilisation d'un réseau de neurones récurrent permet de générer des séquences de variables de sortie de longueurs variables en recueillant des séquences de variables d'entrée de longueurs variables.

Le réseau de neurones récurrent 8 est configuré pour déterminer et émettre un indice ind, un coefficient de modulation longitudinale lon et un coefficient de modulation latérale lat à partir des variables d'entrée reçues par le module 6 de réception. Plus particulièrement, les variables ind, lon et lat sont déterminées de sorte à minimiser la somme des jerks latéraux subis par le véhicule 4 au cours d'une manoeuvre, tout en garantissant une certaine sécurité, en évitant des éventuels obstacles et en respectant une longueur maximale de la manoeuvre.

Le dispositif 2 comporte une table de consultation 10. La table 10 peut être désignée par l'appellation anglo-saxonne « Look-Up Table », ou sous l'acronyme correspondant « LUT ». La table 10 est en liaison d'informations avec le réseau de neurones récurrent 8. La table 10 contient une pluralité de formes de chemin en fonction d'un indice ind. Les formes de chemin stockées dans la table 10 correspondent à des chemins possibles pour le véhicule 4.

Le dispositif 2 comporte un moduleur temporel 12. Le moduleur 12 est en liaison d'informations avec le réseau de neurones récurrent 8 et avec la table 10. Plus précisément, le moduleur 12 est apte à moduler respectivement, par rapport au temps, la position longitudinale, latérale des points constituant le chemin délivré par la table 10 en fonction d'un coefficient de modulation longitudinal, latéral délivré par le réseau de neurones récurrent 8. En d'autres termes, le moduleur 12 est capable de dilater ou de contracter le chemin délivré par la table 10. Le chemin dilaté ou contracté par le moduleur 12 est associé à un profil de vitesse, qui détermine une séquence temporelle de points de route. Cette séquence temporelle est fournie au dispositif de loi de commande (non représenté) du véhicule 4.

En référence à la figure 2, on a représenté les principales phases d'un procédé de planification d'un chemin pour le véhicule automobile 4 pouvant être mis en oeuvre au moyen du dispositif 2.

Le procédé comprend une première phase P01 d'entraînement du réseau de neurones récurrent 8. La phase P01 est mise en oeuvre dès que l'ordinateur de bord (non représenté) du véhicule 4 est hors-ligne, c'est-à-dire avant la livraison du véhicule 4, lors d'une maintenance du véhicule 4 ou lors d'un stationnement prolongé du véhicule 4.

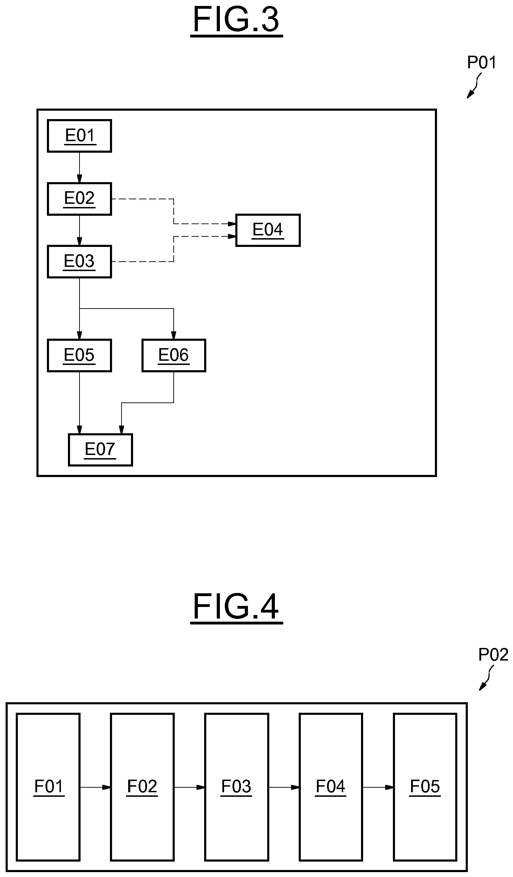

En référence à la figure 3, la phase P01 comprend une première étape E01 d'enregistrement de comportements réels de conducteur. Par exemple, on pourra enregistrer le comportement de pilotes d'essais sur des véhicules du même modèle que le véhicule 4. En même temps que le comportement, un type de manoeuvre peut être reconnu et enregistré. Par exemple, une action de quitter le centre d'une file de circulation pour atteindre le centre d'une file de circulation, pouvant être la même file de circulation ou une file de circulation différente, peut être reconnue et enregistrée.

La phase P01 comprend une deuxième étape E02 de groupement des données enregistrées par type de manoeuvre. Plus précisément, au cours de l'étape E02, on crée une pluralité de groupes d'un premier niveau correspondant chacun respectivement à une manoeuvre enregistrée au cours de l'étape E01. Par exemple, si au cours de l'étape E01, des données ont été enregistrées respectivement pour des manoeuvres de changement de file de circulation, des manoeuvres de recentrage dans une même file de circulation, des manoeuvres de freinage d'urgence et des manoeuvres d'évitement d'urgence d'un véhicule, quatre groupes de premier niveau sont respectivement associés aux quatre manoeuvres précitées.

Le procédé comprend une troisième étape E03 de groupement des données enregistrées par longueur de manoeuvre. Au cours de l'étape E03, on crée dans chaque groupe de premier niveau une pluralité de groupes d'un second niveau correspondant chacun respectivement à une longueur de manoeuvre enregistrée au cours de l'étape E01. Par exemple, si des données ont été enregistrées respectivement pour des manoeuvres de freinage d'urgence sur une distance de 20 mètres (+/- 10%), des manoeuvres de freinage d'urgence sur une distance de 30 mètres (+/-10%) et des manoeuvres de freinage d'urgence sur une distance de 50 mètres (+/- 10%), le groupe de premier niveau associé à la manoeuvre de freinage d'urgence est subdivisé en trois groupes de second niveau respectivement associés aux trois longueurs de manoeuvre précitées.

La phase P01 comporte une quatrième étape E04 d'enrichissement de la table 10. Au cours de l'étape E04, on utilise les trajectoires reçues au cours de l'étape E01 pour affiner les trajectoires stockées dans la table 10.

La phase P01 comporte une étape E05 d'isolation des caractéristiques remarquables associées aux différents groupes définis lors des étapes E02 et E03. En particulier, au cours de l'étape E05, les caractéristiques remarquables peuvent être :
- des informations issues du module de fusion telles qu'une information d'état concernant le véhicule 4, une information d'état concernant les objets environnants, une carte représentant pour chaque véhicule voisin la position, la vitesse et l'accélération du véhicule voisin et l'espace libre ou sans danger autour du véhicule voisin, ainsi que les lignes de délimitation des files de circulation,
- les informations relatives au contexte, telles qu'une surface de chaussée, une météo, une condition diurne ou nocturne, une information de visibilité,
- des informations relatives au véhicule 4, telles que la sélection d'un mode de conduite,
- des informations d'intention, comme l'activation réelle ou simulée d'un clignotant, un changement brutal d'angle de direction, un freinage brusque (de sorte à détecter une intention de freinage d'urgence).

La phase P01 comprend une étape E06 de définition du moyen de classification temporelle. En l'espèce, le réseau de neurones récurrent 8 du type RNN-LSTM utilisant une fonction CTC est défini au cours de l'étape E06.

La phase P01 comprend une étape E07 d'entraînement du réseau de neurones récurrent 8. L'étape E07 est mise en oeuvre en utilisant comme entrées l'ensemble de caractéristiques remarquables isolées au cours de l'étape E05 et comme sorties les possibles trajectoires enregistrées et groupées dans les étapes E01, E02 et E03.

L'invention ne se limite pas aux étapes qui viennent d'être décrites en référence à l'exemple illustré. En particulier, au lieu d'utiliser les techniques de groupement mises en oeuvre dans les étapes E02 et E03, des stratégies d'apprentissage compétitif pourraient être utilisées. D'autres variantes pouvant être utilisées sont présentées dans la publication « Trajectory clustering for motion prédiction, International Conférence on Intelligent Robots and Systems », de Sung C., Feldman D. et Rus D. [4].

En référence à la figure 2, le procédé comporte une deuxième phase P02 d'inférence. La phase P02 est réalisée en ligne, c'est-à-dire qu'elle est constamment mise en oeuvre lorsque le véhicule 4 est en roulage. Bien que la phase P01 soit représentée plus haut et soit a été décrite avant la phase P02, la phase P01 peut succéder et/ou précéder la phase P02.

En référence à la figure 4, la phase P02 comporte une première étape F01 de réception d'une séquence de variables d'entrée. La séquence de variables d'entrée reçue est constituée de n vecteurs, chaque vecteur étant constitué des différentes variables d'entrée reçues par le module 10 à un instant ti, où i est compris entre 1 et n. La valeur du chiffre n est choisie de telle sorte que la longueur de la séquence de variables d'entrée soit suffisante pour déterminer des valeurs ind, lon et lat pertinentes. Les variables d'entrée sont sensiblement les mêmes que les caractéristiques remarquables isolées au cours de l'étape E05 de la phase P01, à savoir typiquement des données issues du module de fusion de capteurs et d'autres informations provenant de certains capteurs spécifiques, telles que des conditions d'adhérence et de visibilité, ou une information d'intention provenant d'un planificateur de comportement. Dans cet exemple de mise en oeuvre, la séquence reçue est temporelle. On ne sort pas du cadre de l'invention en envisageant un autre type de séquence, notamment une séquence métrique.

La phase P02 comprend une deuxième étape F02 de saisie de la séquence de variables d'entrée dans le réseau de neurones récurrent 8. Au cours de l'étape F02, on recueille un indice ind, un coefficient de modulation longitudinale lon et un coefficient de modulation latérale lat délivrés par le réseau de neurones récurrents 8.

La phase P02 comporte une troisième étape F03 de saisie de l'indice ind dans la table 10. Au cours de l'étape F03, on recueille une forme de chemin délivrée par la table 10.

La phase P02 comporte une quatrième étape de modulation temporelle de la forme de chemin recueillie au cours de l'étape F03. Au cours de l'étape F04, on effectue une dilatation ou une contraction longitudinale de la forme de chemin recueillie au cours de l'étape F03 par rapport au coefficient lon, et une dilatation ou une contraction latérale de la forme de chemin recueillie au cours de l'étape F03 par rapport au coefficient lat.

La phase P02 comprend une étape F05 de vérification pour l'évitement de collision. Au cours de l'étape F05, on vérifie que le chemin modulé obtenu à l'issue de l'étape F04 n'implique pas un risque de collision du véhicule 4 avec un autre objet. En cas de risque de collision avec un autre objet, un signal d'erreur est émis de sorte à répéter la phase P02 en sélectionnant un chemin différent.

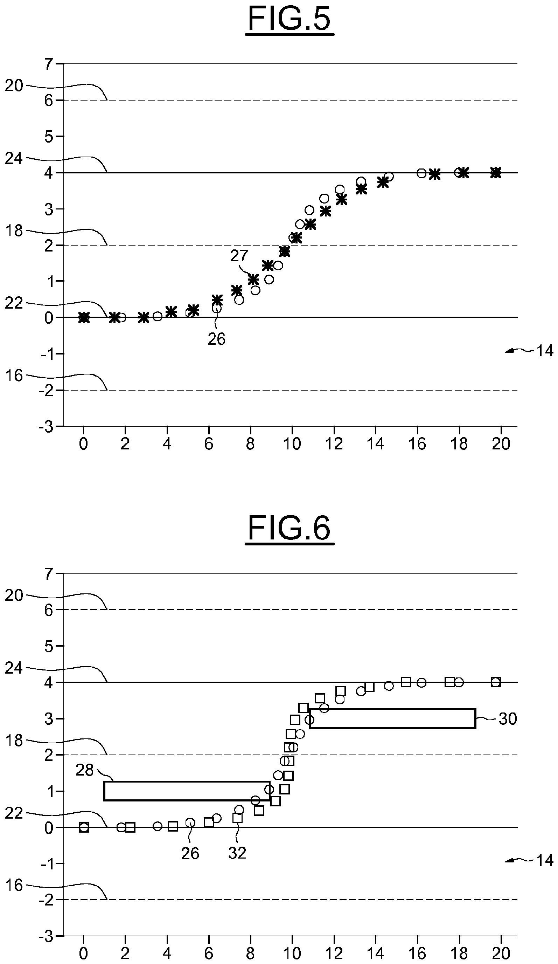

On a représenté sur les figures 5 et 6 des exemples de chemin pouvant être planifiés par le dispositif 2 pour le véhicule 4. La figure 5 représente une première situation de fonctionnement du véhicule 4 et la figure 6 représente une deuxième situation de fonctionnement du véhicule 4.

Sur les figures 5 et 6, on a schématiquement représenté une chaussée 14 comprenant plusieurs files de circulation délimitées latéralement par une première ligne de délimitation 16, une deuxième ligne de délimitation 18 et une troisième ligne de délimitation 20. Par ailleurs, on a schématiquement représenté une ligne centrale 22 de la file située entre les lignes 16 et 18 et une ligne centrale 24 de la file située entre les lignes 18 et 20. Dans les deux situations de fonctionnement, un chemin est planifié pour permettre le changement de file de circulation du véhicule 4. La vitesse latérale est nulle à l'état initial et à l'état final. La vitesse longitudinale est la même pour l'état initial et l'état final.

En référence à la figure 5, un chemin 26 schématiquement représenté par une succession de cercles est délivré par la table 10 suite à l'émission de l'indice ind₅₆ correspondant par le réseau de neurones récurrent 8. Le chemin 26 correspond à la forme de chemin recueillie lors de l'étape F03 du procédé selon l'invention. Le réseau de neurones récurrent 8 délivre un coefficient lon₅ choisi de manière à minimiser la somme des jerks latéraux sur l'ensemble de la manoeuvre. Dans l'exemple des figures 5 et 6, le coefficient lat₅₆ délivré par le réseau de neurones récurrent est égal à 1. Le chemin 28 schématiquement représenté par une succession de croix correspond au chemin dilaté longitudinalement par le moduleur 12 sous l'effet du coefficient lon₃ émis par le réseau de neurones récurrent 8. Le chemin 28 correspond au chemin modulé obtenu à l'issue de l'étape F04 du procédé selon l'invention. Dans ces conditions, le véhicule 4 suivra le chemin 28.

En référence à la figure 6, un premier obstacle 28 et un deuxième obstacle 30 sont disposés sur la chaussée 14. L'indice ind₅₆ délivré par le réseau de neurones récurrent 8 est le même que pour la figure 5. Ainsi, on retrouve le chemin 26 de la figure 5. En revanche, le réseau de neurones récurrent 8 tient compte de la présence des obstacles 28 et 30 et émet un coefficient lon₆ pour permettre l'évitement des obstacles 28 et 30. Le chemin 32 schématiquement représenté par une succession de carrés correspond au chemin contracté longitudinalement par le moduleur 12 sous l'effet du coefficient lon₆. Le chemin 32 correspond donc au chemin modulé obtenu à l'issue de l'étape F04 et sera le chemin suivi par le véhicule 4 dans ce mode de fonctionnement.

Au vu de ce qui précède, l'invention permet de fournir un chemin et/ou une trajectoire optimale en tenant compte de toutes les contraintes internes et toutes les contraintes externes pouvant être prises en compte, en mettant en oeuvre peu de ressources de calcul lors de la phase d'inférence. En particulier, par l'utilisation d'un moyen de classification temporelle, le besoin en ressources de calcul est transféré sur une phase d'entraînement hors-ligne, ce qui permet d'obtenir une planification robuste en limitant sa complexité.

Liste de publications citées :
[1] WERLING, Moritz, ZIEGLER, Julius, KAMMEL, Sören, et al. Optimal trajectory génération for dynamic street scénarios in a frenet frame. Dans : Robotics and Automation (ICRA), 2010 IEEE International Conférence on. IEEE, 2010. p. 987-993 (ISBN 978-1-4244-5040-4).
[2] MERCY, Tim, VAN LOOCK, Wannes, PIPELEERS, Goele, et al. Time-optimal motion planning in the presence of moving obstacles. 2015.
[3] LEE, You-Min et KIM, Jong-Hwan. Trajectory Génération Using RNN with Context Information for Mobile Robots. Dans : Robot Intelligence Technology and Applications 4. Springer, Cham, 2017. p. 21-29 (ISBN : 978-3-319-31291-0).
[4] SUNG, Cynthia, FELDMAN, Dan, et RUS, Daniela. Trajectory clustering for motion prédiction. Dans : Intelligent Robots and Systems (IROS), 2012 IEEE/RSJ International Conférence on. IEEE, 2012. p. 1547-1552.

## Revendications

1. Procédé de planification d'une loi de commande comprenant l'ensemble des commandes pour qu'un véhicule automobile (4) suive un chemin et/ou une trajectoire, comprenant :
- une étape (P01) d'entraînement, lorsque le véhicule (4) n'est pas en déplacement, d'un réseau de neurones récurrent (8), cette étape d'entraînement comprenant une première étape (E01) d'enregistrement de comportements de conducteurs, une deuxième étape (E02) de groupement de premier niveau des données enregistrées et comprenant étape (E05) d'isolation de caractéristiques remarquables associées aux différents groupes définis à l'étape d'isolation, le réseau de neurones (8) étant entraîné en utilisant comme entrées l'ensemble des caractéristiques remarquables isolées et comme sorties les possibles trajectoires enregistrées et groupées,
- une étape (P02) d'inférence lorsque le véhicule (4) est en roulage, cette étape d'inférence comprenant une étape de réception (F01) d'une séquence de variables d'entrée, lesdites variables étant sensiblement les mêmes que les caractéristiques remarquables isolées précédemment, et comprenant une étape (F02) de saisie de la séquence de variables d'entrée dans le réseau de neurones récurrent (8), le procédé de planification comprenant la détermination, en fonction de la séquence de variables d'entrée, de la loi de commande en utilisant le réseau de neurones récurrent (8), le réseau de neurones récurrent (8) étant configuré pour utiliser une fonction de classification temporelle connexionniste.

2. Procédé selon la revendication 1, dans lequel l'étape (F02) de saisie de la séquence de variables d'entrée dans le réseau de neurones récurrent (8) est effectuée après que ladite séquence ait subi une opération de passage à un état compacté, dans le but de réduire leur empreinte mémoire.

3. Procédé selon la revendication 1 ou 2, dans lequel, au cours de l'étape d'entraînement (P01), pour chaque groupement de premier niveau, l'on groupe un ensemble de séquences de variables correspondant respectivement à des manoeuvres de durées de mise en oeuvre sensiblement égales et/ou de distances de mise en oeuvre sensiblement égales dans un groupement de second niveau.

4. Procédé selon l'une quelconque des revendications 1 à 3, l'étape (F02) de saisie comprenant l'émission par le réseau de neurones (8) d'un indice (ind, ind₅₆) et d'au moins un coefficient de modulation temporelle (lon, lon₅, lon₆, lat, lat₅₆), la lecture (F03) dans une table de consultation (10) d'un chemin associé à l'indice (ind, ind₅₆) émis et la modulation temporelle (F04) du chemin lu par le coefficient de modulation temporelle (lon, lon₅, lon₆, lat, lat₅₆) émis.

5. Procédé selon l'une quelconque des revendications 1 à 4, dans lequel le réseau de neurones (8) émet un coefficient de modulation temporelle (lon, lon₅, lon₆) selon la direction longitudinale et/ou un coefficient de modulation temporelle (lat, lat₅₆) selon la direction latérale.

6. Programme d'ordinateur comprenant un code configuré pour, lorsqu'il est exécuté par un processeur ou une unité de contrôle électronique, mettre en oeuvre le procédé selon l'une quelconque des revendications 1 à 5.

7. Véhicule automobile comprenant un processeur ou une unité de contrôle électronique configuré pour l'exécution du programme d'ordinateur selon la revendication 6.

## Patentansprüche

1. Verfahren zur Planung eines Steuerungsgesetzes, das den Satz Steuerungen beinhaltet, damit ein Kraftfahrzeug (4) einem Weg und/oder einer Trajektorie folgt, beinhaltend:
- einen Schritt (P01) des Trainierens, wenn sich das Fahrzeug (4) nicht bewegt, eines rekurrenten neuronalen Netzes (8), wobei dieser Schritt des Trainierens einen ersten Schritt (E01) des Aufzeichnens von Fahrerverhaltensweisen, einen zweiten Schritt (E02) des Gruppierens, auf einer ersten Ebene, der aufgezeichneten Daten beinhaltet und beinhaltend Schritt (E05) des Isolierens von bemerkenswerten Eigenschaften, die mit den unterschiedlichen Gruppen, die während des Schritts des Isolierens definiert werden, assoziiert sind, wobei das neuronale Netz (8) dadurch trainiert wird, dass als Eingänge der Satz der isolierten bemerkenswerten Eigenschaften und als Ausgänge die aufgezeichneten und gruppierten möglichen Trajektorien verwendet werden,
- einen Inferenzschritt (P02), wenn das Fahrzeug (4) fährt, wobei dieser Inferenzschritt einen Schritt des Empfangens (F01) einer Sequenz von Eingangsvariablen beinhaltet, wobei die Variablen im Wesentlichen die gleichen sind wie die zuvor isolierten bemerkenswerten Eigenschaften, und beinhaltend einen Schritt (F02) des Erfassens der Sequenz von Eingangsvariablen in dem rekurrenten neuronalen Netz (8), wobei das Planungsverfahren die Bestimmung, in Abhängigkeit von der Sequenz von Eingangsvariablen, des Steuerungsgesetzes unter Verwendung des rekurrenten neuronalen Netzes (8) beinhaltet, wobei das rekurrente neuronale Netz (8) dazu konfiguriert ist, eine konnektionistische zeitliche Klassifizierungsfunktion zu verwenden.

2. Verfahren nach Anspruch 1, wobei der Schritt (F02) des Erfassens der Sequenz von Eingangsvariablen in dem rekurrenten neuronalen Netz (8) durchgeführt wird, nachdem die Sequenz einem Vorgang zur Umwandlung in einen komprimierten Zustand unterzogen wurde, um ihren Speicherbedarf zu reduzieren.

3. Verfahren nach Anspruch 1 oder 2, wobei während des Schritts des Trainierens (P01) für jede Gruppierung auf einer ersten Ebene ein Satz von Sequenzen von Variablen, die jeweils Manövern mit im Wesentlichen gleichen Umsetzungsdauern und/oder mit im Wesentlichen gleichen Umsetzungsentfernungen entsprechen, in eine Gruppierung auf einer zweiten Ebene gruppiert wird.

4. Verfahren nach einem beliebigen der Ansprüche 1 bis 3, wobei der Schritt (F02) des Erfassens das Ausgeben, durch das neuronale Netz (8), eines Indexes (ind, ind₅₆) und mindestens eines zeitlichen Modulationskoeffizienten (Ion, lon₅, lon₆, lat, lat₅₆), das Lesen (F03), in einer Nachschlagetabelle (10), eines mit dem ausgegebenen Index (ind, ind₅₆) assoziierten Weges und das zeitliche Modulieren (F04) des gelesenen Weges durch den ausgegebenen zeitlichen Modulationskoeffizienten (lon, lon₅, lon₆, lat, lat₅₆) beinhaltet.

5. Verfahren nach einem beliebigen der Ansprüche 1 bis 4, wobei das neuronale Netz (8) einen zeitlichen Modulationskoeffizienten (Ion, lon₅, lon₆) gemäß der Längsrichtung und/oder einen zeitlichen Modulationskoeffizienten (lat, lat₅₆) gemäß der Seitenrichtung ausgibt.

6. Computerprogramm, das einen Code beinhaltet, der dazu konfiguriert ist, bei Ausführung durch einen Prozessor oder eine elektronische Steuereinheit das Verfahren nach einem beliebigen der Ansprüche 1 bis 5 umzusetzen.

7. Kraftfahrzeug, das einen Prozessor oder eine elektronische Steuereinheit beinhaltet, der/die zur Ausführung des Computerprogramms nach Anspruch 6 konfiguriert ist.

## Claims

1. Method for planning a control law comprising all of the commands for a motor vehicle (4) to follow a path and/or a trajectory, comprising:
- a step (P01) of training, when the vehicle (4) is not in motion, a recurrent neural network (8), this training step comprising a first step (E01) of recording drivers' behaviour, a second step (E02) of first-level grouping the recorded data and comprising a step (E05) of isolating remarkable features associated with the various groups defined in the isolation step, the neural network (8) being trained using all of the isolated remarkable features as inputs and the recorded and grouped possible trajectories as outputs,
- a step (P02) of inferring, when the vehicle (4) is driving, this inference step comprising a step (F01) of receiving a sequence of input variables, said variables being substantially the same as the previously isolated remarkable features, and comprising a step (F02) of entering the sequence of input variables into the recurrent neural network (8), the planning method comprising determining, as a function of the sequence of input variables, the control law using the recurrent neural network (8), the recurrent neural network (8) being configured to use a connectionist temporal classification function.

2. Method according to Claim 1, wherein the step (F02) of entering the sequence of input variables into the recurrent neural network (8) is carried out after said sequence has undergone an operation of moving to a compacted state, with the aim of reducing their memory footprint.

3. Method according to Claim 1 or 2, wherein, during the training step (P01), for each first-level grouping, a set of sequences of variables corresponding to manoeuvres of substantially equal implementation durations and/or of substantially equal implementation distances, respectively, are grouped in a second-level grouping.

4. Method according to any one of Claims 1 to 3, the entry step (F02) comprising the neural network (8) transmitting an index (ind, ind₅₆) and at least one time modulation coefficient (Ion, lon₅, lon₆, lat, lat₅₆), reading (F03), in a look-up table (10), a path associated with the transmitted index (ind, ind₅₆) and time-modulating (F04) the read path by the transmitted time modulation coefficient (Ion, lon₆, lon₆, lat, lat₅₆) .

5. Method according to any one of Claims 1 to 4, wherein the neural network (8) transmits a longitudinal time modulation coefficient (Ion, lon₅, lon₆) and/or a lateral time modulation coefficient (lat, lat₅₆).

6. Computer program comprising a code configured to, when it is executed by a processor or an electronic control unit, implement the method according to any one of Claims 1 to 5.

7. Motor vehicle comprising a processor or an electronic control unit configured to execute the computer program according to Claim 6.
